# EUROPÄISCHE PATENTSCHRIFT

(11) **EP 0 308 650 B1**
(45) Veröffentlichungstag und Bekanntmachung des Hinweises auf die Patenterteilung: **09.02.1994**
(21) Anmeldenummer: 88113397.9
(22) Anmeldetag: 18.08.1988
(51) Int. Cl.: H04L 7/04, H04L 7/02, H04B 14/02

(54) **Verfahren und Schaltungsanordnung zum Ableiten des Worttaktes eines pulslagenmodulierten Signals**
Method and device for deducting the word clock of a pulse position modulated signal
Méthode et dispositif pour réduire l'horloge de mot des signaux modulés par la disposition des impulsions

(30) Priorität: 25.09.1987 DE 3732287
(43) Veröffentlichungstag der Anmeldung: 29.03.1989
(73) Patentinhaber: ANT Nachrichtentechnik GmbH, D-71522 Backnang (DE)
(72) Erfinder: Wiesmann, Theo, Dipl.-Ing., D-7150 Backnang (DE); Steinert, Wolfgang, Dipl.-Ing., D-7150 Backnang (DE); Müller, Jürgen, Dipl.-Ing., D-7050 Waiblingen (DE); Nöldeke, Christoph, Dr.rer.nat., D-7012 Fellbach (DE)

(56) Entgegenhaltungen:
- EP-A- 0 044 402
- US-A- 3 864 583
- US-A- 4 648 133
- PATENT ABSTRACTS OF JAPAN, Band 9, Nr. 23 (E-293), 30. Januar 1985;& JP-A-59 169 248 (OKI) 25-09-1984

## Beschreibung

Die vorliegende Erfindung betrifft ein Verfahren zum Ableiten des Worttaktes eines pulslagemodulierten Signals, bei dem jedes Wort in mehrere Zeitschlitze unterteilt ist und in irgendeinem der Zeitschlitze eines jeden Wortes ein Impuls auftritt.

Um aus einem empfangenen pulslagemodulierten Signal den Worttakt ableiten und den Demodulator auf den Worttakt synchronisieren zu können, wird nach einem üblichen Verfahren in das pulslagemodulierte Signal sendeseitig mindestens ein Synchronwort eingefügt, aus dem der Worttakt ableitbar ist. Empfangsseitig wird dann zur Detektion dieses Synchronwortes auf das pulslagemodulierte Signal die Methode der größten Wahrscheinlichkeit (maximum likelihood method) angewendet, was z. B. bekannt ist aus IEEE Transactions on Communications, Vol. COM-33, No. 4, Apr. 1985, S. 357-360 oder Vol. COM-35, No.2, Febr. 1987, S. 250-255 oder Vol. COM-35, No. 6, June 1987, S. 632-636.

Ferner offenbart die US-A-4 648 133 ein Verfahren ohne die Verwendung von Synchronworten. Dort wird das pulslagemodulierte Signal mit einem Bewertungssignal multipliziert, dessen Periodendauer der Wortlänge des pulslagemodulierten Signals entspricht. Die darauffolgende Mittelung der Produktsignale ergibt im synchronisierten Zustand das Ergebnis Null. Aufgrund der Verwendung eines speziellen DTL Filters und einer Pulsformregenerierungsstufe am Eingang ist hier der Schaltungsaufwand relativ hoch.

Der Erfindung liegt die Aufgabe zugrunde, ein Verfahren zum Ableiten des Worttaktes eines pulslagemodulierten Signals anzugeben, für das keine in das pulslagemodulierte Signal eingefügten Synchronworte erforderlich sind und das trotzdem mit geringem Schaltungsaufwand eine möglichst fehlerfreie Ableitung des Worttaktes ermöglicht.

Dem Anspruch 1 bzw. 4 ist ein diese Aufgabe lösendes Verfahren zu entnehmen, und eine Schaltungsanordnung zum Durchführen des Verfahrens nach Anspruch 1 bzw. 4 geht aus dem Anspruch 8 bzw. 9 hervor.

Zweckmäßige Ausführungen der Erfindung geben die übrigen Unteransprüche an.

Anhand von in der Zeichnung dargestellten Ausführungsbeispielen wird nachfolgend die Erfindung näher erläutert. Es zeigen:
- Figur 1: ein Impulsdiagramm,
- Figur 2: ein Prinzipschaltbild, das nach einem Verfahren der Erfindung arbeitet,
- Figur 3 und 4: zwei in die Schaltung nach Figur 2 einsetzbare Detailschaltungen, welche für eine digitale Signalverarbeitung konzipiert sind.

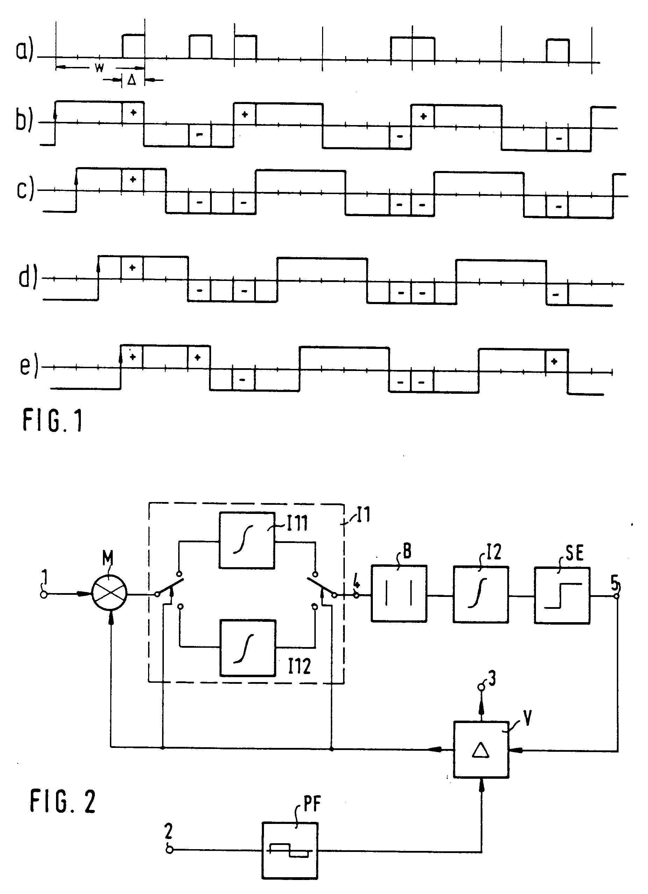

Die Zeile a) des Impulsdiagramms der Figur 1 zeigt ein Beispiel für ein pulslagemoduliertes Signal. In der englischsprachigen Literatur wird die Pulslagemodulation als pulse-position modulation oder kurz M-PPM bezeichnet, wobei M die Zahl der möglichen Lagen - d.h. Zeitschlitze - innerhalb eines Wortes angibt, in denen ein Impuls auftreten kann. Das in der Zeile a) in Figur 1 dargestellte pulslagemodulierte Signal ist z. B. ein 4-PPM Signal, da jedes der Worte mit der Länge w in 4 Zeitschlitze der Breite Δ aufgeteilt ist.

Das nachfolgend anhand des Prinzipschaltbildes der Figur 2 beschriebene Verfahren zum Ableiten des Worttaktes eines pulslagemodulierten Signals bezieht sich auf ein 4-PPM Signal, läßt sich aber entsprechend auch allgemein auf ein M-PPM Signal mit M = 2 anwenden.

Ein pulslagemoduliertes Signal - es soll im folgenden kurz PPM Signal genannt werden - wird einem Eingang 1 eines analog arbeitenden Multiplizierers M zugeführt. An einen zweiten Eingang des Multiplizierers M wird ein sogenanntes Bewertungssignal gelegt. Dieses Bewertungssignal wird aus dem am Eingang 2 der Schaltung bereitstehenden Zeitschlitztakt abgeleitet, der in einem üblichen Verfahren z. B. mit Hilfe einer Phasenregelschleife ermittelt werden kann. Von einem Pulsformer PF wird aus dem Zeitschlitztakt ein bipolares Bewertungssignal gebildet, dessen Periodendauer der doppelten Wortlänge des PPM Signals, also in dem vorliegenden Beispiel dem 8fachen der Zeitschlitzbreite entspricht. Das am Ausgang des Pulsformers PF erscheinende Bewertungssignal, dessen Anstiegsflanke genau mit dem Beginn irgendeines Zeitschlitzes des PPM Signals zusammenfällt, gelangt über eine Verzögerungsschaltung V an den zweiten Eingang des analogen Multiplizierers M. Die Verzögerungsschaltung V kann so gesteuert werden, daß durch sie das Bewertungssignal um ein n faches (n =0, 1, 2...) der Zeitschlitzbreite verzögert wird. Zunächst leitet die Verzögerungsschaltung V das vom Pulsformer PF gelieferte Bewertungssignal unverzögert (0 · Δ) an den Multiplizierer M weiter.

Die Zeile b) in Figur 1 verdeutlicht die Multiplikation des unverzögerten bipolaren Bewertungssignals mit dem PPM Signal. Dadurch bleibt ein unter der positiven Periodenhälfte liegender Impuls des PPM Signals positiv und ein unter der negativen Periodenhälfte liegender Impuls wird invertiert. Unter der Voraussetzung, daß, wie die Zeile b) in Figur 1 zeigt, das Bewertungssignal phasensynchron mit einem Wort des PPM Signals beginnt, fällt unter jede Periodenhälfte des Bewertungssignals ein Impuls; und da aus der Multiplikation des bipolaren Bewertungssignals mit dem PPM Signal nur ein positiver und nur ein negativer Impuls resultieren, führt eine Integration des Produktsignals über die gesamte Periodendauer (hier: 8 · Δ) des Bewertungssignals in diesem Fall zu einem Signal mit dem Pegel "0". Abweichungen vom Signalpegel "0" stellen sich aber ein, wenn das Produktsignal einer Multiplikations des PPM Signals mit dem Bewertungssignal, das nicht mit einem Wort des PPM Signals phasensynchron beginnt, integriert wird. Beispiele hierfür zeigen die Zeilen c) bis e) der Figur 2. Dabei fallen unter die zwei Periodenhälften des Bewertungssignals unterschiedlich viele Impulse des PPM Signals, wodurch eine sich über die gesamte Periodendauer des Bewertungssignals erstreckende Integration immer ein von "0" abweichendes Signal liefert. Also kann man hieraus schließen, daß, wenn die Integration des Produktsignals ein Nullsignal hervorbringt, das Bewertungssignal mit einem Wort des PPM Signals beginnt und daher aus dem Bewertungssignal der synchrone Worttakt des PPM Signals ableitbar ist, und daß bei einem vom Nullsignal abweichendes Ergebnis der Integration das Bewertungssignal nicht phasensynchron mit dem Worttakt des PPM Signals ist. Nun wird aber bei einer Multiplikation des Bewertungssignals mit dem PPM-Signal selbst bei Phasensynchronität das integrierte Produktsignal von "0" abweichen, da in der Praxis das PPM Signal immer verrauscht ist und daher die von dem Bewertungssignal erfaßten Impulse nicht die gleiche Signalenergie enthalten. Die Integration nur eines Produktsignals kann also nicht zuverlässig darüber Auskunft geben, ob die Abweichung vom Nullsignal auf Rauschen im PPM Signal oder auf eine fehlende Phasensynchronität des Bewertungssignals mit dem Worttakt des PPM Signals zurückzuführen ist. Um diese Fehlerquelle auszuschließen, wird das PPM Signal mehrfach zeitlich aufeinanderfolgend mit dem Bewertungssignal multipliziert (s. Zeilen b), c), d) oder e) der Figur 1) und jedes Produktsignal, wie oben dargelegt, mit einer Integrationsvorrichtung I1 integriert. Dann wird jedes der integrierten Produktsignale einer Betragsbildung B unterzogen Anschließend werden von einem Integrator I2 die Beträge aller aus der ersten Integration hervorgehenden Signale integriert, und schließlich wird das daraus resultierende Signal einem Schwellwertentscheider SE zugeführt. Liegt das von dem letzten Integrator I2 gebildete Signal unterhalb der vom Schwellwertentscheider I2 vorgegebenen Schwelle, so kann daraus zuverlässig geschlossen werden, daß das Bewertungssignal phasensynchron mit dem Worttakt des PPM Signals ist. In diesem Fall wird das Bewertungssignal an den Ausgängen 3 der Verzögerungsschaltung V durchgeschaltet. Überschreitet das Ausgangssignals des Integrators I2 die Schwelle, so liegt keine Phasensynchronität vor, und es wird eine erneute Mehrfachmultiplikation des Bewertungssignals mit dem PPM Signal nach dem beschriebenen Verfahren durchgeführt. Allerdings veranlaßt dann der Schwellwertentscheider SE die Verzögerungsschaltung V, das Bewertungssignal um einen Zeitschlitz Δ verzögert auf den Multiplizierer M durchzuschalten. Das hat zur Folge, daß die erneute Mehrfachmultiplikation in einem gegenüber der vorangehenden Mehrfachmultiplikation um einen Zeitschlitz Δ versetzten Zeitrahmen des PPM Signals stattfindet. Diese Mehrfachmultiplikation mit um jeweils einen weiteren Zeitschlitz Δ verzögertem Bewertungssignal (vgl. Zeilen b) bis e) der Figur 1) wird so oft wiederholt bis das Ausgangssignal des zweiten Integrators I2 unterhalb der Schwelle des Schwellwertentscheiders liegt.

Die oben angesprochene Betragsbildung der einzelnen integrierten Produktsignale ist deshalb erforderlich, weil die integrierten Produktsignale im Laufe einer Mehrfachmultikation unterschiedliche Vorzeichen haben können und daher eine Integration dieser verschiedene Vorzeichen aufweisenden Ausgangssignale der ersten Integrationseinrichtung I1 ein unterhalb der vorgegebenen Schwelle liegendes Signal ergeben kann, obwohl keine Phasensynchronität des Bewertungssignal mit dem Worttakt des PPM Signals besteht. Außerdem ist zu beachten, daß bei einer im PPM Signal auftretenden Folge identischer Worte, wenn das Bewertungssignal bei einer Mehrfachmultiplikation gerade die Impulse dieser Wortfolge erfaßt, das Ausgangssignal des zweiten Integrators I2 immer unterhalb der Schwelle des Schwellwertentscheiders SE liegen wird, obwohl gar keine Phasensynchronität besteht. Um auch in solchen Fällen eine korrekte Information über die Phasensynchronität zu erhalten, muß das Bewertungssignal bei jeder Mehrfachmultiplikation über mehr Wortlängen hintereinander mit dem PPM Signal multipliziert werden als maximal identische Worte unmittelbar nacheinander im PPM Signal überhaupt auftreten können.

Der Schwellwertentscheider SE kann so konzipiert sein, daß er seine Schwelle adaptiv ändert in Abhängigkeit von der Zahl der nacheinander auszuführenden Multiplikationen und von der dem PPM Signal überlagerten Rauschleistung.

Zweckmäßigerweise besteht die Integrationseinrichtung I1 aus zwei parallel geschalteten Integratoren I11 und I12. Sie integrieren abwechselnd die hintereinander vom Multiplizierer M kommenden Produktsignale, und zwar führt jeweils ein Integrator die Integration eines Produktsignals aus, während der andere Integrator das Ergebnis seiner Integration des vorausgegangenen Produktsignals an die nachfolgenden Schaltungseinheiten abgibt und dann zurückgesetzt wird.

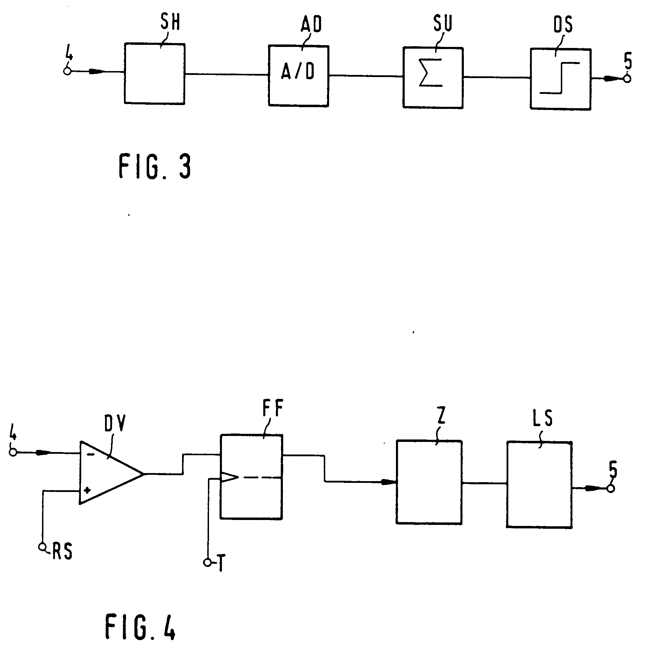

Beim in der Figur 2 dargestellten Ausführungsbeispiel wird die Weiterverarbeitung der integrierten Produktsignale rein analog vorgenommen. An dieser Stelle bietet sich aber auch eine digitale Signalverarbeitung an. Dazu können die zwischen den Anschlußpunkten 4 und 5 befindlichen Schaltungseinheiten z. B durch die in der Figur 3 gezeigten ersetzt werden. Damit werden die am Ausgang der Integrationseinrichtung I1 bereitgestellten integrierten Produktsignale in einer Sample and Hold Schaltung SH abgetastet, dann die Abtastwerte in einem Analog-Digital-Wandler AD in Digitalsignale umgesetzt und diese in einer digitalen Summationsschaltung SU addiert. Das aus einer Mehrfachmultiplikation hervorgehende Ergebnis der digitalen Addition wird schließlich in einem digitalen Schwellwertentscheider DS mit einem Schwellwert verglichen.

Eine andere Variante für die Weiterverarbeitung der Ausgangssignale der Integrationseinrichtung I1 geht schematisch aus der Figur 4 hervor. Hierbei wird jedes analoge Ausgangssignal der Integrationseinrichtung I1 in einem Komparator, z. B. Differenzverstärker DV, mit einem Referenzsignal RS verglichen. Übersteigt ein Ausgangssignal der Integrationseinrichtung I1 das Referenzsignal - d.h. die beiden Periodenhälften des bipolaren Bewertungssignals haben bei der vor der Integration ausgeführten Multiplikation nicht gleich viele Impulse des PPM Signals erfaßt (vgl. Zeilen c) bis e) der Figur 1) - so wird eine Flipflopschaltung FF mit dem Takt T des Bewertungssignals auf "1" gesetzt. Alle "1" Impulse der Flipflopschaltung FF, welche während einer Mehrfachmultiplikation des Bewertungssignals mit dem PPM Signal auftreten, werden von einem Zähler Z gezählt. von einer Logikschaltung LS wird schließlich die Zahl der im Zähler Z registrierten "1" Impulse mit einer Schwellenzahl verglichen. Wird die Schwellenzahl überstiegen von der Zahl der "1" Impulse, so gilt die Lage des mit dem PPM Signal multiplizierten Bewertungssignals als nicht phasensynchron zum Worttakt des PPM Signals. Anders ist es, wenn die Zahl der "1" Impulse unter der Schwellenzahl liegt, dann besteht Synchronität.

Bei dem vorangehend beschriebenen Verfahren sind alle bis zum Auffinden der phasensynchronen Lage des Bewertungssignals erforderlichen Mehrfachmultiplikationsvorgänge einschließlich der Integrationen und Schwellwertentscheidung seriell nacheinander ausgeführt worden. Eine Alternative hierzu stellt die parallele Signalverarbeitung dar. Und zwar werden dazu die bereits geschilderten Verfahrensschritte von der Mehrfachmultiplikation über die zwei Integrationen bis auf die Schwellwertentscheidung in mehreren parallel ablaufenden Prozeduren angewendet. In Abwandlung von der Figur 2 hätte dann eine Schaltungsanordnung zum Durchführen der parallelen Prozeduren mehrere parallele Schaltungszweige, von denen jeder so konzipiert sein kann wie der gemäß Figur 2 einschließlich den in Figur 3 und 4 gezeigten Schaltungsvarianten zwischen den Anschlußpunkten 1 und 5 eingesetzte Schaltungszweig,allerdings ohne den analogen Schwellwertentscheider SE bzw. den digitalen Schwellwertentscheider DS bzw. die Logikschaltung LS. Eine solche für die parallelen Prozeduren ausgelegte Schaltungsanordnung ist zeichnerisch nicht eigens dargestellt worden, weil sie sich sehr leicht aus den in den Figuren 2, 3 und 4 dargestellten Schaltungen ableiten läßt durch einfaches Parallelschalten der dort vorhandenen Schaltungszweige. Für jede der parallel ablaufenden Prozeduren wird den Multiplizierern der parallelen Schaltungszweige das Bewertungssignal um jeweils einen Zeitschlitz des PPM Signals zeitversetzt zugeführt, so daß sich in jedem der parallelen Schaltungszweige die Mehrfachmultiplikation des Bewertungssignals über einen anderen Zeitrahmen des PPM Signals erstreckt.

Die aus den parallelen Prozeduren hervorgehenden Signale werden miteinander verglichen, wobei die zeitliche Lage des Bewertungssignals, welche derjenigen Prozedur zugeordnet ist, die das Signal mit dem geringsten Pegel hervorgebracht hat, als synchron bzgl. des Worttaktes des pulslagemodulierten Signals gilt. Diese Gegenüberstellung der Signale wird mit einer Vergleichsschaltung ausgeführt, die an die Ausgänge der parallelen Schaltungszweige angeschlossen ist.

## Patentansprüche

1. Verfahren zum Ableiten des Worttaktes eines pulslagemodulierten Signals, bei dem jedes Wort in mehrere Zeitschlitze unterteilt ist und in irgendeinem der Zeitschlitze eines jeden Wortes ein Impuls auftritt, dadurch gekennzeichnet,
a) daß ein bipolares Bewertungssignal erzeugt wird, das synchron mit irgendeinem Zeitschlitz beginnt und dessen Periodendauer dem geradzahligen Vielfachen einer Wortlänge des pulslagemodulierten Signals entspricht,
b) daß dieses Bewertungssignal mehrfach zeitlich aufeinanderfolgend mit dem pulslagemodulierten Signal in einem sich über mehrere Wortlängen (w) erstreckenden Zeitrahmen multipliziert wird,
c) daß das aus jeder Multiplikation des Bewertungssignals mit dem pulslagemodulierten Signal resultierende Produktsignal integriert wird,
d) daß dann die Beträge aller der aus den Integrationen der einzelnen Produktsignale hervorgehenden Signale integriert werden,
e) daß darauf das aus der letzten Integration resultierende Signal einer Schwellwertentscheidung unterzogen wird,
f) und daß, wenn das Signal unterhalb einer Schwelle liegt, die Lage des Bewertungssignals als synchron bzgl. des Worttaktes des pulslagemodulierten Signals gilt, und wenn das Signal oberhalb der Schwelle liegt, das Bewertungssignal gegenüber den pulslagemodulierten Signal um einen Zeitschlitz verschoben wird und dann der vorangehende Verfahrensablauf wiederholt wird, wobei die Verschiebung des Bewertungssignals um einen weiteren Zeitschlitz und der anschließende Verfahrensablauf so oft wiederholt werden bis ein unterhalb der Schwelle liegendes Signal festgestellt wird.

2. Verfahren nach Anspruch 1, dadurch gekennzeichnet, daß die Schwelle adaptiv in Abhängigkeit von der Zahl der durchzuführenden Multiplikationen und der dem pulslagemodulierten Signal überlagerten Rauschleistung festgelegt wird.

3. Verfahren nach Anspruch 1, dadurch gekennzeichnet, daß jedes integrierte Produktsignal in einem Komparator (DV) mit einem Referenzsignal verglichen wird, daß jede Überschreitung des Referenzsignals durch das integrierte Produktsignal registriert wird, daß in einem Zähler sämtliche Überschreitungen gezählt werden, die jeweils im Laufe einer Mehrfachmultiplikation registriert werden und daß, wenn die Zahl der Überschreitungen einen vorgegebenen Wert übertrifft, eine weitere Mehrfachmultiplikation mit dem um einen Zeitschlitz zeitversetzten Bewertungssignal durchgeführt wird.

4. Verfahren zum Ableiten des Worttaktes eines pulslagemodulierten Signals, bei dem jedes Wort in mehrere Zeitschlitze unterteilt ist und in irgendeinem der Zeitschlitze eines jeden Wortes ein Impuls auftritt, dadurch gekennzeichnet,
a) daß ein bipolares Bewertungssignal erzeugt wird, das synchron mit irgendeinem Zeitschlitz beginnt und dessen Periodendauer dem geradzahligen Vielfachen einer Wortlänge des pulslagemodulierten Signals entspricht,
b) daß dieses Bewertungssignal mehrfach zeitlich aufeinanderfolgend mit dem pulslagemodulierten Signal in einem sich über mehrere Wortlängen erstreckenden Zeitrahmen multipliziert wird,
c) daß das aus jeder Multiplikation des Bewertungssignals mit dem pulslagemodulierten Signal resultierende Produktsignal integriert wird,
d) daß dann die Beträge aller der aus den Integrationen der einzelnen Produktsignale hervorgehenden Signale integriert werden.
e) daß die Verfahrensschritte b) bis d) in mehreren parallel ablaufenden Prozeduren angewendet werden, wobei zu jeder Prozedur die Mehrfachmultiplikation des Bewertungssignals mit dem pulslagemodulierten Signal zu Beginn eines anderen Zeitschlitzes gestartet wird,
f) und daß darauf die in allen Prozeduren gemäß Verfahrensschritt d) durch Integration ermittelten Signale miteinander verglichen werden und dabei die zeitliche Lage des Bewertungssignals, welche derjenigen Prozedur zugeordnet ist, die das Signal mit dem geringsten Pegel hervorgebracht hat, als synchron bzgl. des Worttaktes des pulslagemodulierten Signals gilt.

5. Verfahren nach den Ansprüchen 1 oder 4, dadurch gekennzeichnet, daß das pulslagemodulierte Signal über mehr Wortlängen mit dem Bewertungssignal multipliziert wird als maximal gleiche Worte unmittelbar hintereinander im pulslagemodulierten Signal auftreten können.

6. Verfahren nach Anspruch 4, dadurch gekennzeichnet, daß jedes integrierte Produktsignal in einem Komparator (DV) mit einem Referenzsignal verglichen wird, daß jede Überschreitung des Referenzsignalpegels durch das integrierte Produktsignal registriert wird, daß in einem Zähler sämtliche registrierten Überschreitungen gezählt werden, die jeweils im Laufe einer Mehrfachmultiplikation registriert werden, und daß die in dem parallel ablaufenden Prozeduren ermittelten Zahlen von Überschreitungen miteinander verglichen werden und dabei die zeitliche Lage des Bewertungssignals, welche derjenigen Prozedur zugeordnet ist, aus der die geringste Zahl von Überschreitungen resultiert, als synchron bzgl. des Worttaktets des pulslagemodulierten Signals gilt.

7. Verfahren nach den Ansprüchen 1 oder 4, dadurch gekennzeichnet, daß das Bewertungssignal mit dem pulslagemodulierten Signal analog multipliziert wird.

8. Schaltungsanordnung zum Durchführen des Verfahrens nach Anspruch 1, dadurch gekennzeichnet, daß eine Pulsformerschaltung (PF) aus dem vorliegenden Schlitztakt des pulslagemodulierten Signals das bipolare Bewertungssignal ableitet, daß ein analoger Multiplizierer (M) vorhanden ist, dem einerseits das pulslagemodulierte Signal und andererseits das Bewertungssignal zugeführt ist, daß an den Ausgang des Multiplizierers (M) eine erste Integrationsvorrichtung (I1) angeschlossen ist, welche jeweils das aus einer Multiplikation des Bewertungssignals mit dem pulslagemodulierten Signal hervorgehende Produktsignal integriert, daß eine zweite Integrationsvorrichtung (I2) vorgesehen ist, die die Beträge aller aus der Integration der einzelnen Produktsignale hervorgehenden Signale integriert, und daß der Ausgang der zweiten Integrationsvorrichtung (I2) mit einem Schwellwertentscheider (SE) verbunden ist, der, wenn das ihm zugeführte Signal oberhalb seiner Schwelle liegt, eine Verzögerungsschaltung (V) ansteuert, die dann das Bewertungssignal gegenüber dem vorangegangenen Multiplikationsvorgang um einen Zeitschlitz des pulslagemodulierten Signals verzögert auf den Multiplizierer durchschaltet.

9. Schaltungsanordnung zum Durchführen des Verfahrens nach Anspruch 4, dadurch gekennzeichnet, daß eine Pulsformerschaltung (PF) aus dem vorliegenden Schlitztakt des pulslagemodulierten Signals das bipolare Bewertungssignal ableitet, daß mehrere parallele Schaltungszweige vorhanden sind, von denen jeder einen analogen Multiplizierer (M) besitzt, dem einerseits das pulslagenmodulierte Signal und andererseits das Bewertungssignal zugeführt ist, an den Ausgang des Multiplizierers (M) eine erste Integrationsvorrichtung (I1)angeschlossen ist, welche jeweils das aus einer Multiplikation des Bewertungssignals mit dem pulslagemodulierten Signal hervorgehende Produktsignal integriert, und eine zweite Integrationsvorrichtung (I2) besitzt, die die Beträge aller aus der Integration der einzelnen Produktsignale hervorgehenden Signale integriert, wobei die Multiplizierer (M) das Bewertungssignal um jeweils einen Zeitschlitz des pulslagemodulierten Signals zeitversetzt zugeführt bekommen, so daß sich in jedem der parallelen Schaltungszweige die Mehrfachmultiplikation des Bewertungssignals mit dem pulslagemodulierten Signal über einen anderen Zeitrahmen des pulslagemodulierten Signals erstreckt, und daß eine Vergleichsschaltung an die Ausgänge der zweiten Integrationsvorrichtung (I2) sämtlicher Schaltungszweige angeschlossen ist und von allen Ausgangssignalen der zweiten Integrationsvorrichtung (I2) dasjenige mit dem geringsten Pegel ermittelt.

10. Schaltungsanordnung nach den Ansprüchen 8 oder 9, dadurch gekennzeichnet, daß die erste Integrationsvorrichtung (I1) aus zwei parallel geschalteten Integratoren (I11, I12) besteht, die wechselweise die Integration der zeitlich direkt aufeinander folgenden Produkte aus den Multiplikationen des Bewertungssignals mit dem pulslagemodulierten Signal ausführen.

## Claims

1. A method of deriving the word timing of a pulse position modulated signal in which each word is subdivided into a plurality of time slots and a pulse occurs in any one of the time slots of each word, characterized in that
a) a bipolar evaluation signal is generated which begins in synchronism with any one time slot and whose period duration corresponds to the even number multiple of a word length of the pulse position modulated signal;
b) this evaluation signal is multiplied repeatedly successively in time with the pulse position modulated signal within a time frame that extends over a plurality of word lengths (w);
c) the product signal resulting from each multiplication of the evaluation signal with the pulse position modulated signal is integrated;
d) then the absolute values of all signals resulting from the integrations of the individual product signals are integrated;
e) whereupon the signal resulting from the last integration is subjected to a threshold decision; and
f) if said signal lies below a threshold, the position of the evaluation signal is considered to be in synchronism with the word timing of the pulse position modulated signal and, if the signal lies above said threshold, the evaluation signal is shifted by one time slot with respect to the pulse position modulated signal and then the above method steps are repeated, with the shift of the evaluation signal by one further time slot and the subsequent method steps being repeated until a signal is found which lies below said threshold.

2. A method according to claim 1, characterized in that the threshold is determined adaptively as a function of the number of multiplications to be performed and in dependence on the noise power superposed on the pulse position modulated signal.

3. A method according to claim 1, characterized in that each integrated product signal is compared with a reference signal in a comparator (DV); a record is made of each time the integrated product signal exceeds the reference signal; all such occurrences recorded in the course of a repeated multiplication are counted in a counter and, if the number of said occurrences exceeds a given value, a further repeated multiplication is performed with the evaluation signal which is offset in time by one time slot.

4. A method of deriving the word timing of a pulse position modulated signal in which each word is subdivided into a plurality of time slots and a pulse appears in any one of the time slots of each word, characterized in that
a) a bipolar evaluation signal is generated which begins in synchronism with any one time slot and whose period duration corresponds to the even number multiple of a word length of the pulse position modulated signal;
b) this evaluation signal is multiplied repeatedly successively in time with the pulse position modulated signal within a time frame that extends over a plurality of word lengths;
c) the product signal resulting from each multiplication of the evaluation signal with the pulse position modulated signal is integrated;
d) then the absolute values of all signals resulting from the integrations of the individual product signals are integrated;
e) method steps b) through d) are performed in a plurality of parallel procedures, with the repeated multiplication of the evaluation signal with the pulse position modulated signal being started at the beginning of a different time slot in each procedure;
f) whereupon the signals determined by integration in all procedures of method step d) are compared with one another and the time position of the evaluation signal which is associated with that procedure which produced the signal having the lowest level is considered to be in synchronism with the word timing of the pulse position modulated signal.

5. A method according to claim 1 or 4, characterized in that the pulse position modulated signal is multiplied with the evaluation signal over more word lengths than the maximum number of identical words that can appear in immediate succession in the pulse position modulated signal.

6. A method according to claim 4, characterized in that each integrated product signal is compared with a reference signal in a comparator (DV); a record is made of each time the integrated product signal exceeds the reference signal level; all such occurrences recorded in the course of one repeated multiplication step are counted in a counter; and the number of occurrences determined in the parallel occurring procedures are compared with one another, with the time position of the evaluation signal associated with that procedure which produced the lowest number of said occurrences being considered to be in synchronism with the word timing of the pulse position modulated signal.

7. A method according to claim 1 or 4, characterized in that the evaluation signal is multiplied in analog with the pulse position modulated signal.

8. A circuit arrangement for implementing the method defined in claim 1, characterized in that a pulse former circuit (PF) derives the bipolar evaluation signal from the existing slot timing of the pulse position modulated signal; an analog multiplier (M) is provided which receives, on the one hand, the pulse position modulated signal and, on the other hand, the evaluation signal; a first integration device (I1) is connected to the output of the multiplier (M) to integrate the product signal resulting from a multiplication of the evaluation signal with the pulse position modulated signal; a second integration device (I2) is provided to integrate the absolute values of all the signals resulting from the integration of the individual product signals; and the output of the second integration device (I2) is connected with a threshold decider (SE) which, if the signal it receives lies above its threshold, actuates a delay circuit (V) which then switches the evaluation signal to the multiplier, relative to the preceding multiplication process, with a delay of one time slot of the pulse position modulated signal.

9. A circuit arrangement for implementing the method defined in claim 4, characterized in that a pulse former circuit (PF) derives the bipolar evaluation signal from the existing slot timing of the pulse position modulated signal; a plurality of parallel circuit branches are provided, each including an analog multiplier (M) which receives, on the one hand, the pulse position modulated signal and, on the other hand, the evaluation signal; a first integration device (I1) is connected to the output of each multiplier (M) to integrate the respective product signal resulting from a multiplication of the evaluation signal with the pulse position modulated signal; each circuit branch further includes a second integration device (I2) to integrate the absolute values of all signals resulting from the integration of the individual product signals, with each multiplier (M) receiving the evaluation signal offset in time by one time slot of the pulse position modulated signal so that in each one of the parallel circuit branches the repeated multiplication of the evaluation signal with the pulse position modulated signal extends over another time frame of the pulse position modulated signal; and a comparison circuit is connected to the outputs of the second integration devices (I2) of all circuit branches to determine, from all output signals of the second integration devices (I2), the signal having the lowest level.

10. A circuit arrangement according to claim 8 or 9, characterized in that the first integration device (I1) is composed of two parallel connected integrators (I11, I12) which alternatingly perform the integration of the temporally immediately successive products of the multiplications of the evaluation signal with the pulse position modulated signal.

## Revendications

1. Procédé pour extraire le rythme de mots d'un signal modulé par position d'impulsions, selon lequel chaque mot est divisé en plusieurs tranches de temps et une impulsion est produite dans une tranche de temps quelconque de chaque mot, caractérisé en ce que
a) on génère un signal de pondération bipolaire qui commence en synchronisme avec une tranche de temps quelconque et dont la durée de période correspond à un multiple entier d'une longueur de mot du signal modulé par position d'impulsions,
b) on multiplie ce signal de pondération à plusieurs reprises qui se suivent dans le temps par le signal modulé par position d'impulsions à l'intérieur d'une trame temporelle s'étendant sur plusieurs longueurs de mot (w),
c) on intègre le signal de produit résultant de chaque multiplication du signal de pondération par le signal modulé par position d'impulsions,
d) on intègre ensuite les valeurs absolues de tous les signaux obtenus par les intégrations des différents signaux de produits,
e) on soumet après cela le signal résultant de la dernière intégration à une décision avec utilisation d'un seuil et
f) on considère que la position du signal de pondération est synchrone par rapport au rythme de mots du signal modulé par position d'impulsions lorsque le signal est au-dessous d'un seuil tandis que, lorsque le signal est au-dessus du seuil, on décale le signal de pondération d'une tranche de temps par rapport au signal modulé par position d'impulsions puis on répète le déroulement précédent du processus, en répétant le décalage du signal de pondération d'une tranche de temps supplémentaire, de même que le déroulement consécutif du processus, jusqu'à ce que l'on constate un signal se trouvant au-dessous du seuil.

2. Procédé selon la revendication 1, caractérisé en ce que l'on fixe le seuil de façon adaptative en fonction du nombre de multiplications à exécuter et de la puissance du bruit superposé au signal modulé par position d'impulsions.

3. Procédé selon la revendication 1, caractérisé en ce que l'on compare chaque signal de produit intégré avec un signal de référence dans un comparateur (DV), que l'on enregistre chaque dépassement du signal de référence par le signal de produit intégré, que l'on compte dans un compteur tous les dépassements enregistrés chaque fois au cours d'une multiplication multiple et que, lorsque le nombre des dépassements est supérieur à une valeur préfixée, on exécute une multiplication multiple supplémentaire par le signal de pondération, décalé dans le temps d'une quantité correspondant à une tranche de temps.

4. Procédé pour extraire le rythme de mots d'un signal modulé par position d'impulsions, selon lequel chaque mot est divisé en plusieurs tranches de temps et une impulsion est produite dans une tranche de temps quelconque de chaque mot, caractérisé en ce que
a) on génère un signal de pondération bipolaire qui commence en synchronisme avec une tranche de temps quelconque et dont la durée de période correspond à un multiple entier d'une longueur de mot du signal modulé par position d'impulsions,
b) on multiplie ce signal de pondération à plusieurs reprises qui se suivent dans le temps par le signal modulé par position d'impulsions à l'intérieur d'une trame temporelle s'étendant sur plusieurs longueurs de mot,
c) on intègre le signal de produit résultant de chaque multiplication du signal de pondération par le signal modulé par position d'impulsions,
d) on intègre ensuite les valeurs absolues de tous les signaux obtenus par les intégrations des différents signaux de produits,
e) on applique les opérations b) à d) du procédé en plusieurs procédures se déroulant parallèlement, en commençant, pour chaque procédure, la multiplication multiple du signal de pondération par le signal modulé par position d'impulsions au début d'une autre tranche de temps et
f) on compare ensuite entre eux les signaux déterminés par intégration dans toutes les procédures selon l'opération d) du procédé et on considère la position temporelle du signal de pondération coordonné à la procédure ayant fourni le signal du niveau le plus faible comme étant synchrone par rapport au rythme de mots du signal modulé par position d'impulsions.

5. Procédé selon la revendication 1 ou 4, caractérisé en ce que l'on multiplie le signal modulé par position d'impulsions par le signal de pondération sur un plus grand nombre de longueurs de mot que le nombre maximal de mots identiques pouvant se produire directement les uns à la suite des autres dans le signal modulé par position d'impulsions.

6. Procédé selon la revendication 4, caractérisé en ce que l'on compare chaque signal de produit intégré avec un signal de référence dans un comparateur (DV), que l'on enregistre chaque dépassement du niveau du signal de référence par le signal de produit intégré, que l'on compte dans un compteur tous les dépassements enregistrés chaque fois au cours d'une multiplication multiple et que l'on compare entre eux les nombres de dépassements déterminés dans les procédures se déroulant parallèlement, en considérant la position temporelle du signal de pondération coordonné à la procédure d'où résulte le plus faible nombre de dépassement comme étant synchrone par rapport au rythme de mots du signal modulé par position d'impulsions.

7. Procédé selon la revendication 1 ou 4, caractérisé en ce que l'on multiplie le signal de pondération par le signal modulé par position d'impulsions de façon analogique.

8. Circuit pour la mise en oeuvre du procédé selon la revendication 1, caractérisé en ce qu'un circuit générateur d'impulsions (PF) extrait le signal de pondération bipolaire du rythme de tranches fourni du signal modulé par position d'impulsions, qu'un multiplicateur analogique (M) est prévu, auquel sont appliqués d'une part le signal modulé par position d'impulsions et d'autre part le signal de pondération, qu'à la sortie du multiplicateur (M) est raccordé un premier dispositif d'intégration (I1) qui intègre chaque fois le signal de produit obtenu par une multiplication du signal de pondération par le signal modulé par position d'impulsions, qu'un second dispositif d'intégration (I2) est prévu qui intègre les valeurs absolues de tous les signaux obtenus par l'intégration des différents signaux de produits et que la sortie du second dispositif d'intégration (I2) est reliée à un circuit de décision à seuil (SE) qui, lorsque le signal qui lui est envoyé est au-dessus de son seuil, commande un circuit de retard (V), lequel transmet alors le signal de pondération au multiplicateur avec un retard correspond à une tranche de temps du signal modulé par position d'impulsions par rapport à l'opération de multiplication précédente.

9. Circuit pour la mise en oeuvre du procédé selon la revendication 4, caractérisé en ce qu'un circuit générateur d'impulsions (PF) extrait le signal de pondération bipolaire du rythme de tranches fourni du signal modulé par position d'impulsions, que plusieurs branches de circuit parallèles sont prévues, dont chacune possède un multiplicateur analogique (M), auquel sont envoyés d'une part le signal modulé par position d'impulsions et d'autre part le signal de pondération, qu'à la sortie du multiplicateur (M) est raccordé un premier dispositif d'intégration (I1) qui intègre chaque fois le signal de produit obtenu par une multiplication du signal de pondération par le signal modulé par position d'impulsions et qu'un second dispositif d'intégration (I2) est prévu qui intègre les valeurs absolues de tous les signaux obtenus par l'intégration des différents signaux de produits, les multiplicateurs (M) recevant le signal de pondération chaque fois décalé dans le temps d'une quantité correspondant à une tranche de temps du signal modulé par position d'impulsions, de sorte que, dans chacune des branches de circuit parallèles, la multiplication multiple du signal de pondération par le signal modulé par position d'impulsions s'étend sur une autre trame temporelle du signal modulé par position d'impulsions, et qu'un circuit de comparaison est connecté aux sorties du second dispositif d'intégration (I2) de toutes les branches de circuit, circuit de comparaison qui détermine, parmi tous les signaux de sortie du second dispositif d'intégration (I2), celui ayant le niveau le plus faible.

10. Circuit selon la revendication 8 ou 9, caractérisé en ce que le premier dispositif d'intégration (I1) est composé de deux intégrateurs (I11, I12) montés en parallèle et qui exécutent alternativement l'intégration des produits, se succédant directement dans le temps, des multiplications du signal de pondération par le signal modulé par position d'impulsions.
